Europäisches Patentamt

European Patent Office

Office européen des brevets

(11) Veröffentlichungsnummer: **0 210 334 B1**

(12) **EUROPÄISCHE PATENTSCHRIFT**

(45) Veröffentlichungstag der Patentschrift:
**10.10.90**

(51) Int. Cl.⁵: **B29C 45/44,** B29C 45/33

(21) Anmeldenummer: **86104641.5**

(22) Anmeldetag: **04.04.86**

(54) **Vorrichtung zum Spritzgiessen von Kleider-Formbügeln.**

(30) Priorität: **25.07.85 DE 3526637**

(43) Veröffentlichungstag der Anmeldung:
**04.02.87 Patentblatt 87/6**

(45) Bekanntmachung des Hinweises auf die Patenterteilung:
**10.10.90 Patentblatt 90/41**

(84) Benannte Vertragsstaaten:
**AT BE FR IT NL SE**

(56) Entgegenhaltungen:
**EP-A- 0 095 224
BE-A- 901 882
DE-A- 1 753 114
DE-U- 8 521 478
DE-U- 8 531 933
FR-A- 2 176 614
GB-A- 2 132 132
US-A- 4 502 660**

(73) Patentinhaber: **Coronet-Kunststoffwerk GmbH,
D-6149 Grasellenbach 3(DE)**

(72) Erfinder: **Weihrauch, Georg, Am Rossert 1,
D-6948 Waldmichelbach 2 / Odw.(DE)**

(74) Vertreter: **Dr.-Ing. Hans Lichti Dipl.-Ing. Heiner Lichti
Dipl.-Phys. Dr. Jost Lempert,
Postfach 41 07 60 Durlacher Strasse 31,
D-7500 Karlsruhe 41(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Vorrichtung zum Spritzgießen von räumlich gewölbten Kleider-Formbügeln mit einem U-förmigen Querschnitt und mit einem Hosensteg mit gleichfalls U-förmigen, nach unten offenem Querschnitt, bestehend aus zwei die Außenkontur des Bügels abformenden, zum Entformen voneinander abrückbaren Werkzeughälften mit einer über den Bügelrücken laufenden und zwischen sich den Bügelhaken aufnehmenden Formtrennaht, einem den Bügel und einem den Hosensteg innenseitig abformenden Kern, der quer zur Abrückbewegung verschiebbar ist.

Formbügel stellen ein spritzgießtechnisch schwer zu beherrschendes Formteil dar, da sie quer zu ihrer Längserstreckung räumlich gewölbt sind und ferner dafür Sorge getragen werden muß, daß die Formtrennähte soweit als möglich verdeckt liegen, um die Beschädigungsgefahr an Kleidungsstücken zu vermeiden. Dies gilt insbesondere für die Randkanten des Bügels. Zur Herstellung solcher Formbügel hat sich die sogenannte liegende Fertigung bewährt, bei der die Formtrennaht über den Bügelrücken verläuft. Zum Abformen der Innenseite des im Querschnitt U-förmigen Bügels dient ein Schieber, während die Außenseiten von zwei Werkzeughälften abgeformt werden, von denen die eine die Anspritzseite der Form bildet, während die andere Werkzeughälfte senkrecht zur Formtrennebene beweglich ist. Diese liegende Fertigung hat den Vorteil, daß die Formtrennähte zwischen Schieber und Werkzeughälften an die Innenseite der Randkanten des Bügels verlegt werden können. Ein weiterer wesentlicher Vorteil für eine rationelle Fertigung liegt darin, daß der aus Metall bestehende Bügelhaken mit eingespritzt werden kann, indem er mittels entsprechender Manipuliergeräte in die Formtrennebene eingelegt wird, wobei er im allgemeinen über die Außenkontur des Werkzeuges frei hervorragt.

Die Ausbildung eines Kleiderbügels für eine liegende Fertigung ist aus der BE-A-901882 bekannt. Bei derartigen Kleiderbügeln ist es prinzipiell möglich, den Hosensteg direkt mit anzuspritzen. Jedoch ist die Ausbildung eines entsprechenden Werkzeuges schwierig. Durch die GB-A-2132132 ist beim Spritzgießen die Verwendung von quer zur Abrückbewegung verschiebbaren Kernteilen bzw. Schiebern bekannt. Bei der Herstellung eines Formbügels mit Hosensteg tritt die Schwierigkeit auf, daß der Hosensteg vor allem in den äußeren Bereichen der Entformungsbewegung der Kernteile im Wege ist, so daß in der Praxis der Hosensteg gesondert gespritzt und nachträglich an entsprechenden Aufnahmen an der Innenseite des Formbügels mechanisch befestigt oder angeklebt wird.

Der Erfindung liegt die Aufgabe zugrunde, eine Vorrichtung des eingangs geschilderten Aufbaus, bei der also der Formbügel liegend gespritzt wird, so auszubilden, daß der Hosensteg in einfacher Weise mit angespritzt werden kann.

Die Aufgabe wird erfindungsgemäß dadurch gelöst, daß die den Bügel und den Hosensteg abformenden Kerne weitgehend einstückig ausgebildet und im Bereich der Ansätze des Hosenstegs am Bügel sowie oberhalb des Hosenstegs mit einem Fenster versehen sind und daß die beiden Werkzeughälften je ein getrennt von ihnen bewegliches Formteil aufweisen, die die Außenkontur des Hosenstegs abformen, in das Fenster von gegenüberliegenden Seiten eingreifen und beim Entformen gegenüber den Werkzeughälften einen Vorlauf aufweisen.

Bei dieser Lösung wird der Kern in der bei einfachen Formbügeln üblichen Weise als Schieber eingesetzt, so daß also seine Bewegung zum Entformen des Bügels führt. Der Entformungsvorgang läuft wie folgt ab: Vor dem Abrücken der einen Werkzeughälfte werden die beiden Formteile abgerückt, so daß der Hosensteg mit seinen Ansätzen an den Bügelarmen außenseitig freikommt. Die Formteile werden so weit bewegt, daß auch das Fenster des einstückigen Kerns frei ist. Anschließend wird die bewegliche Werkzeughälfte abgerückt und der einstückige Kern für die Innenseite des Hosenstegs und des Bügels quer zur Abrückbewegung in die Entformungsposition verschoben, so daß der Bügel frei wird und aus der Form entnommen werden kann. Es könnte auch ein Formteil mit einer Werkzeughälfte einstückig ausgebildet sein und mit diesen gemeinsam verfahren werden.

Hierbei kann es bei Formbügeln mit einem hohen mittleren Bereich vorteilhaft sein, wenn der den Bügel innenseitig abformende Kern ein beim Entformen vorlaufendes Kernteil aufweist, das den mittleren Bereich der Bügelinnenseite abformt. Es wird während des Entformungsvorganges das mittlere Kernteil zunächst um einen bestimmten Entformungsweg bewegt und der Restweg, der auch zum Entformen der Bügelarme notwendig ist, gemeinsam mit dem übrigen Kern durchgeführt.

Nachstehend ist die Erfindung anhand eines in der Zeichnung wiedergegebenen Ausführungsbeispiels beschrieben.

In der Zeichnung zeigen:

Figur 1 eine Ansicht auf die anspritzseitige Werkzeughälfte in der Schließlage;

Figur 2 einen Schnitt II - II gemäß Figur 1 in der Schließlage der Vorrichtung;

Figur 3 einen Schnitt III - III gemäß Figur 1, gleichfalls in der Schließlage der Vorrichtung; und

Figur 4 einen der Figur 2 entsprechenden Schnitt in der Öffnungslage der Vorrichtung.

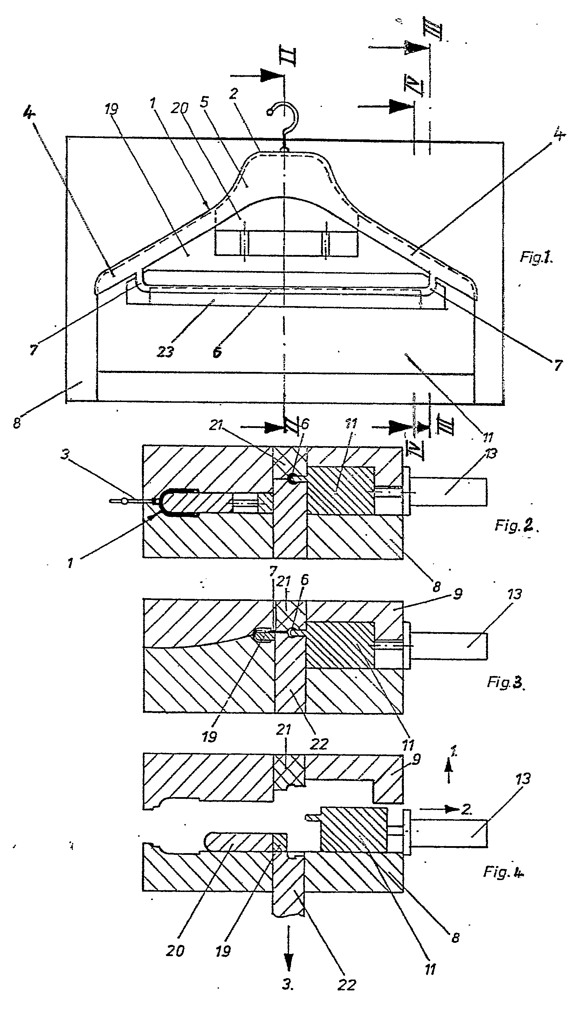

Zunächst werden die für das Verständnis der Erfindung maßgeblichen Merkmale des Formbügels 1 beschrieben. Er besteht aus einem mittleren Bereich 2 mit eingespritztem Aufhängehaken 3 und den daran anschließenden Bügelarmen 4, wobei die Seitenwangen 5 im mittleren Bereich 2 im allgemeinen höher ausgebildet sind als im Bereich der Bügelarme 4. Der Formbügel 1 weist einen Hosensteg 6 auf, der über Ansätze 7 an der vorderen Seitenwange bzw. an die Innenseite des Formbügels 1 angeschlossen ist. Der Formbügel 1 und der Hosensteg 6 weisen, wie aus Figur 2 und 3 ersichtlich, ein nach unten offenes U-Profil auf, wobei der Hosensteg 6 in einer planen Ebene liegt, während der Formbügel 1, wie sich aus Figur 3 folgern läßt, räumlich gewölbt ist. Die Wölbung ist so ausgebildet, daß der Hosensteg 6 in einer Ebene oberhalb des mittleren Bereichs 2 des Formbügels 1 liegt.

Die Vorrichtung besteht aus einer ortsfesten, anspritzseitigen Werkzeughälfte 8 und einer demgegenüber in eine Entformungsstellung abrückbaren Werkzeughälfte 9, die beide die gesamte Außenkontur des Formbügels 1 und des Hosenstegs 6 abformen (s. Figur 2).

Der Aufhängehaken 3 des Formbügels 1 ist in die Formtrennebene eingelegt. Zum Abformen der Innenseite des U-Profils des Hosenstegs 6 dient ein Kern 11, der mit einem Hauptkernteil 19 zum Abformen des U-Profils des Formbügels 1 einstückig ist. Für den mittleren Bereich 2 mit der dort höheren Seitenwange 5 ist ein weiteres Kernteil 20 vorgesehen, das in dem Kernteil 19 verschiebbar ist. Innerhalb der beiden Werkzeughälften 8, 9, die die gesamte Außenkontur des Formbügels 1 und des Hosenstegs 6 abformen, ist je ein Formteil 21 bzw. 22 angeformt, das den Bereich des Hosenstegs 6 und der Ansätze 7 abformt. Diese Formteile 21, 22 greifen in ein entsprechendes Fenster 23, das in den Kernen 11 und 19 vorgesehen ist, ein.

Zum Entformen werden zunächst die Formteile 21, 22, anschließend die Werkzeughälfte 9, abgerückt, das mittlere Kernteil 20 innerhalb des Kerns 19 (in den Zeichnungen nach rechts) verschoben und daraufhin der Kern 11 zusammen mit dem Kern 19 mittels des Antriebes 13 in die in Figur 4 wiedergegebene Entformungsstellung bewegt, so daß der Formbügel 1 in der etwa in Figur 2 wiedergegebenen Position verbleibt. Es könnte auch das Formteil 21 gemeinsam mit der Werkzeughälfte 9 bewegt werden.

## Patentansprüche

1. Vorrichtung zum Spritzgießen von räumlich gewölbten Kleider-Formbügeln mit einem U-förmigen Querschnitt und mit einem Hosensteg mit gleichfalls U-förmigen, nach unten offenem Querschnitt, bestehend aus zwei die Außenkontur des Bügels abformenden, zum Entformen voneinander abrückbaren Werkzeughälften mit einer über den Bügelrücken laufenden und zwischen sich den Bügelhaken aufnehmenden Formtrennnaht und einem den Bügel und einem den Hosensteg innenseitig abformenden Kern, der quer zur Abrückbewegung verschiebbar ist, dadurch gekennzeichnet, daß die den Bügel (1) und den Hosensteg (6) abformenden Kerne (11, 19) weitgehend einstückig ausgebildet und im Bereich der Ansätze (7) des Hosenstegs (6) am Bügel (1) sowie oberhalb des Hosenstegs mit einem Fenster (23) versehen sind, und daß die beiden Werkzeughälften (8, 9) je ein getrennt von ihnen bewegliches Formteil (21, 22) aufweisen, die die Außenkontur des Hosenstegs (6) abformen, in das Fenster (23) von gegenüberliegenden Seiten eingreifen und beim Entformen gegenüber den Werkzeughälften (8, 9) einen Vorlauf aufweisen.

2. Vorrichtung nach Anspruch 1, dadurch gekennzeichnet, daß der den Bügel (1) innenseitig abformende Kern (19) mehrteilig ausgebildet ist und ein beim Entformen verlaufendes Kernteil (20) aufweist, das den mittleren Bereich der Bügelinnenseite abformt.

## Claims

1. Apparatus for the injection moulding of spatially convex clothes hangers with a U-shaped cross-section and with a trouser bar also gaving a U-shaped, downwardly open cross-section, comprising two mould halves shaping the outer contour of the hanger and which can be moved away from one another for demoulding purposes and having amould separating seam passing over the hanger back and receiving between them the hanger hook and a core shaping the inside of the trouser bar and the hanger and which is displaceable at right angles to the removal movement, characterized in that the cores (11, 19) shaping the hanger (1) and the trouser bar (6) are substantially constructed in one piece and in the vicinity of the shoulder (7) of the trouser bar (6) on hanger (1) and above the trouser bar are provided with a window (23) and that the two mould halves (8, 9) in each case have a mould part (21, 22) movable separately thereof and shaping the outer contour of the trouser bar (6) engage in the window from opposite sides and during demoulding are in advance of the mould halves (8, 9).

2. Apparatus according to claim 1, characterized in that the core (19) internally shaping the hanger (1) is constructed in multipart manner and has a core part (20) which is in advance during demoulding and which shapes the central region of the hanger inside.

## Revendications

1. Dispositif pour mouler par injection des cintres bombés dans l'espace qui présentent une section en U et comportent une barrette porte-pantalon présentant également une section en U ouverte vers le bas, constitué par deux moitiés d'outil qui, moulant le contour extérieur du cintre et pouvant pour le démoulage être retierées l'une de l'autre, présentent un joint de moule s'étendant sur le dos du cintre et recevant entre les moitiés d'outil le crochet de cintre, et par un noyau moulant le cintre et la barrette porte-pantalon intérieurement et qui peut coulisser transversalement au mauvement de retrait, carachtérisé en ce que les noyaux (11, 19) moulant respectivement le cintre (1) et la barrette porte-pantalon (6) sont réalisés dans une large mesure en une seule pièce et sont munis, dans la région des éléments annexes (7) reliant la barrette porte-pantalon (6) au cintre (1) ainsi qu'au-dessus de la barrette porte-pantalon, d'une fenêtre (23) et en ce que les deux moitiés d'outil (8, 9) comportent chacune un élément de moule (22, 21) qui, déplaçables indépendamment de ces dernières et moulant le contour extérieur de la barrette porte-pantalon (6), s'engagent de côtés opposés dans la fenêtre (23) et présentent lors du démoulage une avance par rapport aux moitiés d'outil (8, 9).

2. Dispositif selon la revedndication 1, caractérisé en ce que le noyau (19) moulant le cintre (1) intérieurement est réalisé en plusieurs parties et présente un élément de noyau (2) se dépla4ant en premier lors du démoulage et qui moule la région médiane du côté intérieur du cintre.

Fig.1.

Fig. 2.

Fig. 3.

Fig. 4.